# EUROPEAN PATENT SPECIFICATION

(11) **EP 1 842 412 B1**
(45) Date of publication and mention of the grant of the patent: **21.02.2018**
(21) Application number: 07006163.5
(22) Date of filing: 26.03.2007
(51) Int. Cl.: A01B 63/108, A01B 59/06

(54) **Tractor front hitches**
Traktorfrontanbauvorrichtungen
Dispositif d'attelage frontal pour tracteur

(30) Priority: 04.04.2006 GB 0606849
(43) Date of publication of application: 10.10.2007
(73) Proprietor: AGCO SA, 60026 Beauvais (FR)
(72) Inventor: Husson, Geoffroy, 54134 Ceintrey (FR)
(74) Representative: Morrall, Roger

(56) References cited:
- EP-A1- 0 182 091
- WO-A-02/21898
- FR-A1- 2 789 846
- GB-A- 2 330 514

## Description

This invention relates to tractor front hitches.

Whilst such front hitches are well known there is a problem in providing a front hitch which has a full range of working movement and is also stowable in a fully raised position in which the forward projection of the hitch is minimised when the hitch is not in use. Examples of such known hitch systems, with the features of the preamble of claim 1, are provided in EP 1 842 412 A1 and EP 0 182 091 A1. It is an object of the present invention to provide an improved front hitch which addresses the above problem.

Thus according to the present invention there is provided a tractor front hitch as claimed in claim 1. The tractor front hitch comprises:
- a support structure for attachment to a chassis of the tractor:
- a linkage pivotally attached on the support structure for pivoting in a vertical sense about a generally horizontal axis;
- actuator means mounted on the support structure for pivoting the linkage relative to the support structure, wherein which the or each actuator means is a main hydraulic cylinder;
- the or each hydraulic cylinder is mounted at its upper end on the support structure and at its lower end about an axis on a link which is s pivotally mounted about an axis on the linkage and can be secured in first and second pivotal positions relative to the linkage, with the link secured in said first pivotal position a first working range of movement of the linkage relative to the support structure is provided by the actuator means and with the link secured in said second pivotal position a second more raised range of movement of the linkage relative to the support structure is provided by the actuator means.

Such a front hitch enables a full range of working movement of the linkage to be achieved using actuator means in the form of a hydraulic cylinder without requiring an excessive stroke from the cylinder.

Also the cylinder is able to raise the linkage to a fully raised stowed position which constitutes the upper limit of the second range of movement to minimise the projection of the linkage from the support structure.

The link may be secured in said first and second pivotal positions by a pin which extends though alternative aligned apertures in the link and hitch respectively.

The linkage may have a pair of lift arms which are rigidly connected for co-rotation about the pivot axis on the support structure. In such a construction each lift arm is preferably provided with a separate link with its own actuator means and is separately securable in its respective first and second pivotal positions.

The hitch also preferably includes a top link which is pivotally mounted on the support structure.

A control means (such as a pair of up and down buttons) is preferably provided on the support structure to allow a tractor operator to control the position of the linkage relative to the support structure.

The other features of the invention are set forth in the accompanying sub-claims.

One embodiment of the present invention will now be described, by way of example only, with reference to the accompanying drawings in which:-
Figures 1 to 4 show perspective views of a tractor front hitch in accordance with the present invention in its fully raised position, at the lower limit of its upper range of movement, at the upper limit of its lower range of movement, and at the lower limit of its lower range of movement respectively;
Figure 5 shows a plan view of the linkage of the hitch of Figures 1 to 4;
Figure 6 shows a perspective view of a connecting link used in the hitch;
Figure 7 shows the position of the linkage, link and hydraulic cylinders when the hitch is in its fully raised position;
Figure 8 shows the position of the linkage, link and hydraulic cylinders when the hitch is at the lower limit of an upper range of its movement;
Figure 9 shows the position of the linkage, link and hydraulic cylinders when the hitch is at the upper limit of a lower range of its movement;
Figure 10 shows the position of the linkage, link and hydraulic cylinders when the hitch is at the lower limit of the lower range of its movement, and
Figure 11 shows an auxiliary cylinder which may be provided to support the weight of the linkage during changes between the ranges of movement of the hitch.

Referring to the drawings, a tractor hitch 10 comprises a cast support structure 11 which is bolted to the front of the tractor chassis and a linkage 12 which is pivotally mounted about a generally horizontal axis 13 on the support structure. The linkage 12 is pivoted relative to the support structure 11 by actuator means in the form of a pair of hydraulic cylinders 14. Each cylinder is mounted at its upper end on the support structure 11 and at its lower end about an axis 16 on a link 15 which is itself pivotally connected about an axis 17 to the linkage 12.

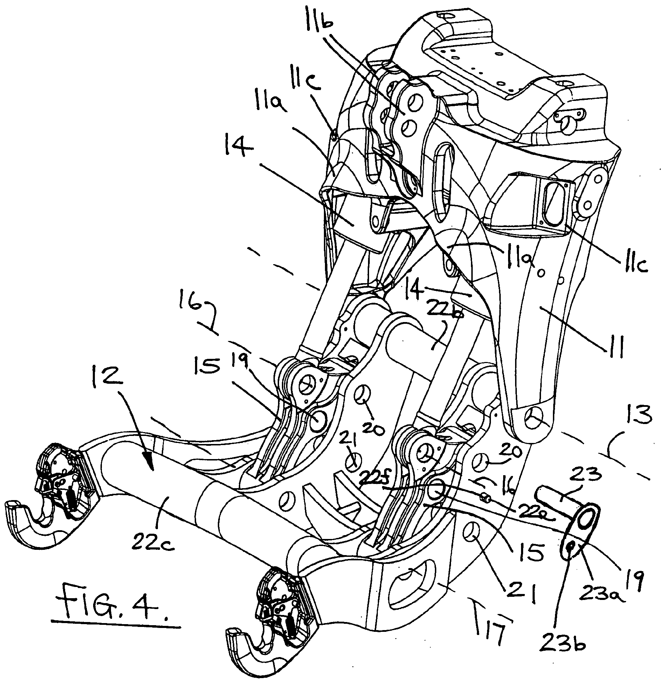

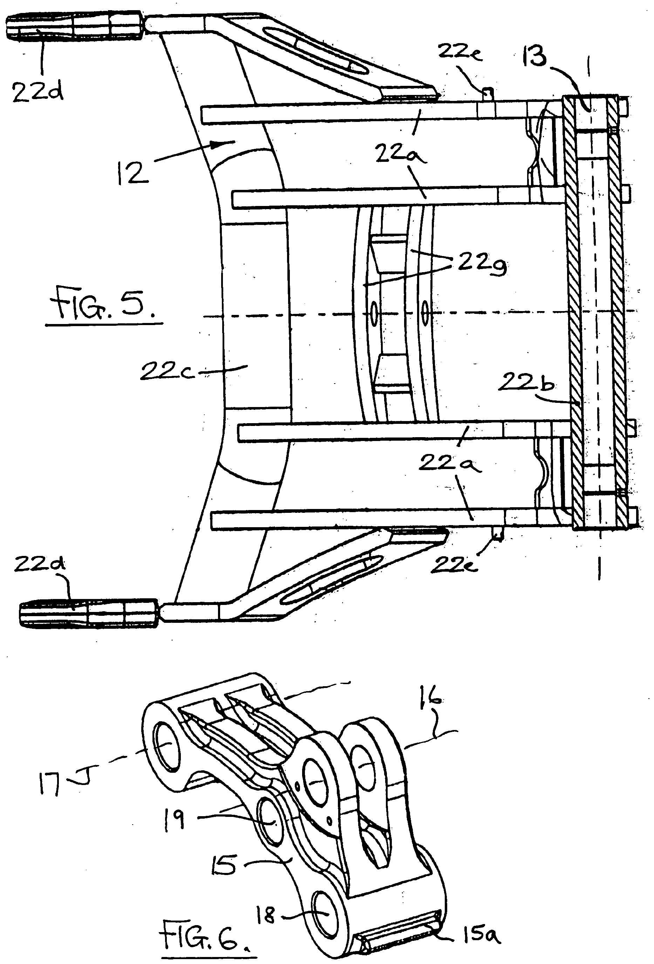

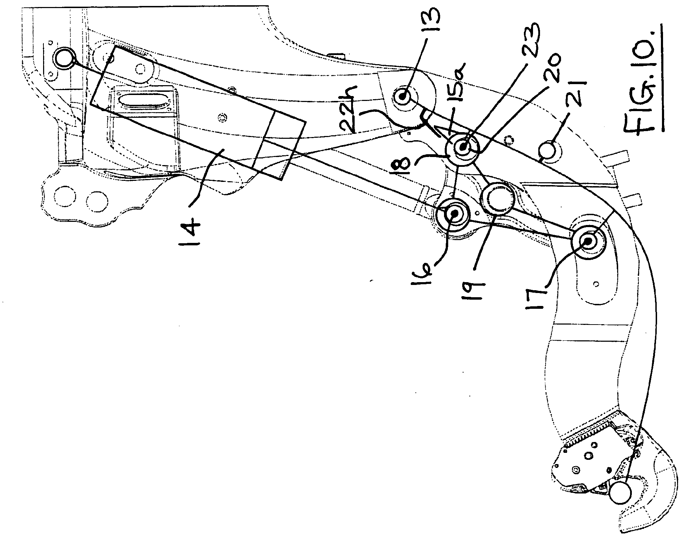

As best seen in Figures 4 and 6 the links 15 each have first holes 18 and second holes 19 which can be aligned with first holes 20 and second holes 21 respectively in the lift arms 22 of the linkage 12. With hitch in the position shown in Figures 4 and 10, pins 23, which have fastening plates 23a with holes 23b for engagement with a peg 22e on each lift arm, can be inserted through the first holes 18 in the links 15 and the first holes 20 in the lift arms 22. Pins 23 can be held on arms 22 by lynch pins (not shown) which can be inserted through holes 22f in the pegs 22e above the plates 23a of the pins.

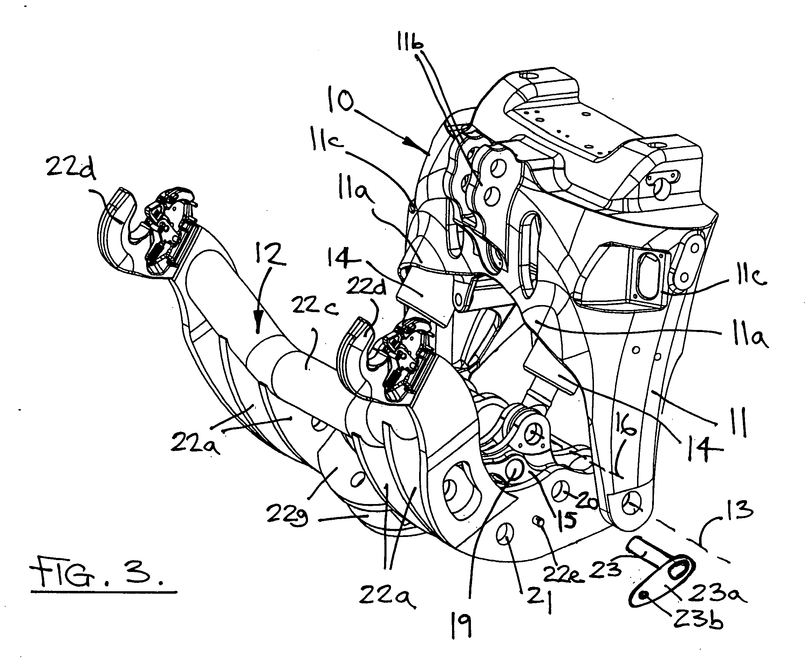

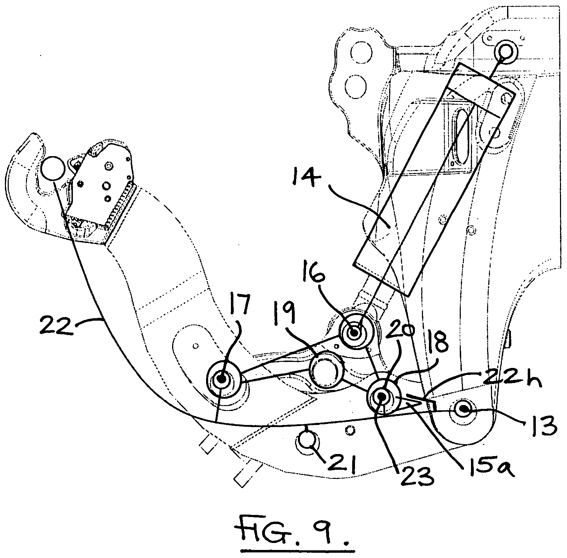

Thus with the cylinders 14 fully extended, as shown in Figure 4, the lift arms occupy their lowest possible position. The lift arms are then moveable through a lower range of movement from the position shown in Figures 4 and 10 to an upper limit of the lower range movement which is shown in Figures 3 and 9 when the cylinders 14 are fully retracted.

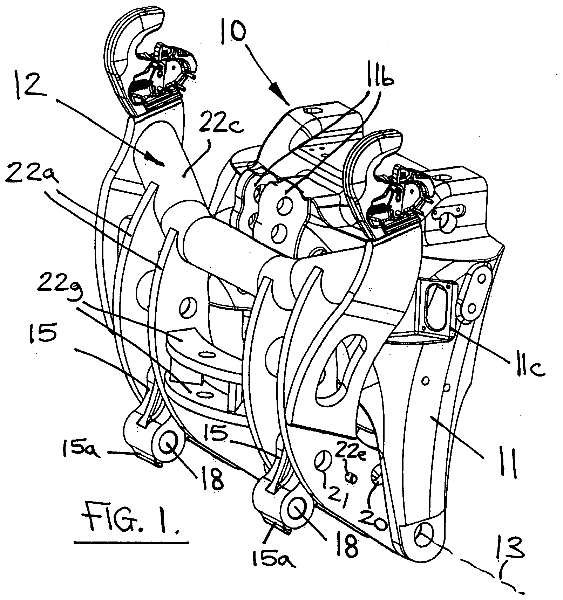

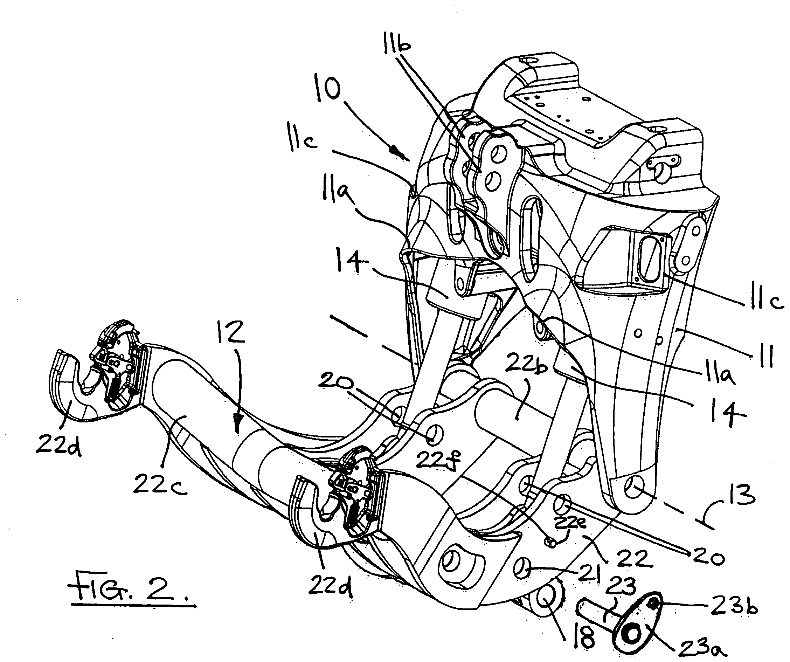

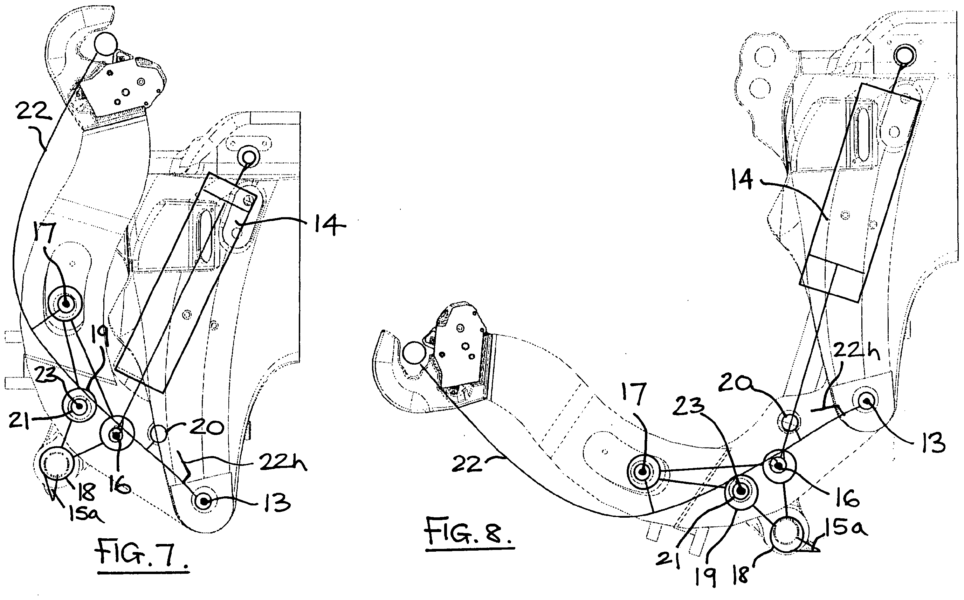

As will be apparent, if the links 15 are secured in their second pivotal position relative to the linkage 12 in which the pins 23 extend through second holes 19 in the links and aligned second holes 21 in the lift arms the linkage 12 is pivotable by the cylinders 14 from a lower limit of an upper range of movement which is shown in Figures 2 and 8 to the upper limit of its upper range of movement which is shown in Figures 1 and 7 and in which upper position the linkage is in a generally vertical fully stowed position.

As a safety precaution the links 15 are provided with a stop projection 15a which, when the pin 23 is in engagement with holes 18 and 20 contact a stop member 22h (see figures 7 to 10) on each link 22 to stop the links 22 falling when the pins 23 are removed.

The hitch is completed by a top link (not shown) which is fastened in position between flanges 11b provided on support structure 11 in the conventional manner.

As will be appreciated, this front hitch arrangement is particularly suitable for heavy work and thus the linkage 12 is of a heavy weight construction, which is best seen in Figure 5, in which the lift links 22 each comprise a pair of parallel plates 22a between which each respective link 15 is pivoted. These lift links are connected together by heavy pivot tube 22b, cross bracing tube 22c and plates 22g. The hitch is completed by the heavy weight implement connecting jaws 22d.

The invention is, if desired, useable on linkages in which the lift links are not rigidly connected for vertical pivoting and in certain constructions the two links 15 may be replaced by a single link which is connected with both lift links.

As will be appreciated, the present invention thus provides a tractor front hitch which has a very large range of working movement from its fully lowered position to its fully raised stowed position and that this large range of movement can be achieved by a relatively short hydraulic cylinder. Thus the cost of the front hitch is reduced and the hitch is stowed in a generally vertical position when not in use so as to minimise the projection of the linkage from the front of the tractor.

The operation of the cylinders 14 may be controlled by pairs of "up" and "down" buttons housed in recesses 11c of the support structure 11. These buttons operate electrically controlled fluid control valves which control the admission of fluid to and the exhaust of fluid from the cylinders 14 in the conventional manner and can conveniently be operated by a tractor driver who is stood to the side of the front of the tractor during the hitching up or unhitching of an implement.

Also, the support structure 11 includes shroud portions 11a which protect to the cylinders 14 from blows during use of the hitch.

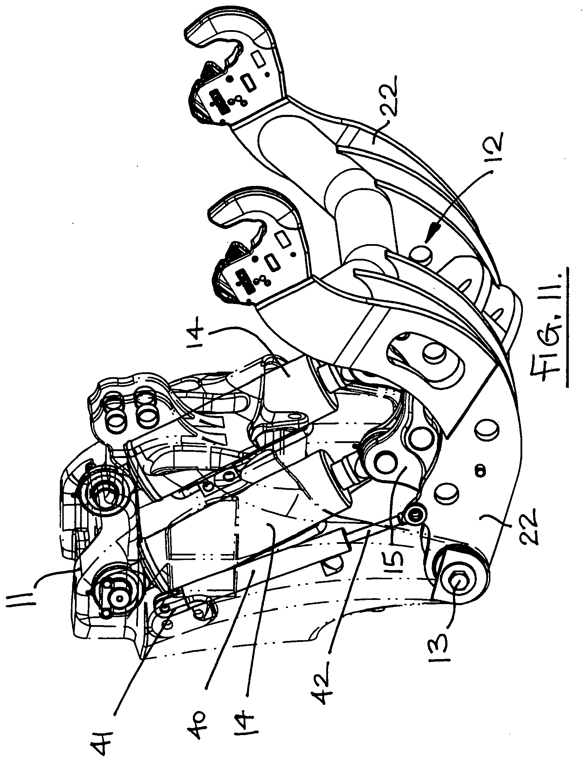

Since the lift links 22 are heavy the hitch may be provided with a small auxiliary cylinder 40 which has a long stroke and which is hydraulically connected directly to cylinder 14. Figure 11 shows such a cylinder 40 with its upper end 41 connected to support structure 11 and is rod 42 connected to the left hand link 22. In Figure 11 the links 22 are raised to the upper limit of the lower range of movement of the hitch (i.e. the cylinders 14 are fully retracted but it can be seen that the longer stroke auxiliary cylinder 40 still has some retractive travel remaining.

Thus, for example, when the tractor operator wishes to move from the lower range of lift link movement to the upper range of link movement he removes the pins 23 from holes 18 and 20 and raises the cylinders into their fully raised position. If the operator then continues to command the cylinders 14 to raise the linkage, the pressure in cylinders 14 will cause auxiliary cylinder 40, which is connected to the same pressure circuit as cylinders 14, to further raise the links 22 and in doing so pivot the links 15 relative to the links 22 to bring the holes 19 and 21 into alignment so that the operator can now insert the pins through the aligned holes 19 and 21. The provision of the auxiliary cylinder 40 thus allows the operator on his own to change between the two ranges of movement of the hitch without needing to physically move the heavy links 22 himself.

## Claims

1. Tractor front hitch (10) comprising:-
- a support structure (11) for attachment to a chassis of the tractor:
- a linkage (12) pivotally attached to the support structure for pivoting in a vertical sense about a generally horizontal axis (13);
- actuator means (14) mounted on the support structure for pivoting the linkage relative to the support structure, wherein which the or each actuator means is a main hydraulic cylinder (14);
- **characterised in that** the or each hydraulic cylinder (14) is mounted at its upper end on the support structure (11) and at its lower end about an axis (16) on a link (15) which is pivotally mounted about an axis (17) on the linkage and can be secured (23) in first and second pivotal positions relative to the linkage, with the link (15) secured in said first pivotal position (18,20) a first working range of movement of the linkage relative to the support structure is provided by the actuator means and with the link (15) secured in said second pivotal position (19,21) a second more raised working range of movement of the linkage relative to the support structure is provided by the actuator means.

2. A hitch according to claim 1 in which the second range of movement of the hitch culminates in a fully raised stowed position of the linkage (12) in which the linkage is substantially vertical to minimise the projection of the linkage from the support structure (11).

3. A hitch according to claim 1 or 2 in which the link (15) can be secured in said first and second pivotal positions by a pin (23) which extends though alternative aligned apertures (18,29:19,21) in the link and hitch respectively.

4. A hitch according to claim 3 in which the linkage (12) has first and second apertures (18,19) and the link (15) has cooperating first and second apertures (20,21), the pin (23) being inserted through aligned first apertures (18,20) in the link and linkage to secure the link in said first pivotal position and through aligned second apertures (19,21) in the link and linkage to secure the link in said second pivotal position.

5. A hitch according to claim to claim 3 or 4 in which stop means (15a,22H) are provided on the link (15) and the linkage (12), the stop means interengaging when the link is in its first pivotal position and preventing downward movement of the linkage relative to the link when the pin (23) is removed from the aligned apertures.

6. A hitch according to any one of claims 1 to 5 in which the linkage (12) has a pair of lift arms (22) which are rigidly connected (22c) for co-rotation about the pivot axis (13) on the support structure (11).

7. A hitch according to claim 6 in which each lift arm (22) is provided with a separate link (15) having its own actuator means (14) and separately securable in its respective first and second pivoted positions.

8. A hitch according to any one of claims 1 to 7 having a top link which is also pivotally mounted on the support structure (11).

9. A hitch according to claim 1 in which an auxiliary hydraulic cylinder (40) is provided which acts between the linkage (12) and the support structure (11) and which is hydraulically connected in parallel with the hydraulic cylinder or cylinders (14) which form the actuator means, the auxiliary cylinder (40) having a longer stroke than the main cylinder or cylinders (14) and being useable to move the linkage when the main cylinder or cylinders are fully retracted thus pivoting the link or links (15) relative to the linkage (12) and thus assisting in changing between the working ranges of the hitch.

10. A hitch according to any one of claims 1 to 9 in which control means are provided on the support structure (11) which allow an operator to control the position of the linkage (12) relative to the support structure (11).

11. A hitch according to any one of claims 1 to 10 in which the support structure (11) is shaped to partially shroud (11a) the actuator means to provide protection for the actuator means during use of the hitch.

## Patentansprüche

1. Traktorfrontkraftheber (10), mit:
- einer Stützstruktur (11) für eine Befestigung an einem Chassis des Traktors;
- einem schwenkbar an der Stützstruktur befestigten Hubwerk (12) zum vertikalen Verschwenken um eine im Wesentlichen horizontale Achse (13);
- an der Stützstruktur montierte Aktuatormitteln (14) zum Verschwenken des Hubwerks relativ zu der Stützstruktur, wobei das Aktuatormittel oder jedes der Aktuatormittel ein Haupthydraulikzylinder (14) ist;
- **dadurch gekennzeichnet, dass** der Hydraulikzylinder (14) oder jeder der Hydraulikzylinder an seinem oberen Ende an der Stützstruktur (11) und an seinem unteren Ende um eine Achse (16) an einem Lenker (15) montiert ist, der um eine Achse (17) an dem Hubwerk schwenkbar montiert ist und in einer ersten Schwenkstellung und einer zweiten Schwenkstellung relativ zu dem Hubwerk gesichert (23) werden kann, wobei, wenn der Lenker (15) in der ersten Schwenkstellung (18, 20) gesichert ist, ein erster Arbeitsbereich einer Bewegung des Hubwerks relativ zu der Stützstruktur durch die Aktuatormittel bereitgestellt wird, und, wenn der Lenker (15) in der zweiten Schwenkstellung (19, 21) gesichert ist, ein zweiter stärker angehobener Arbeitsbereich einer Bewegung des Hubwerks relativ zu der Stützstruktur durch die Aktuatormittel bereitgestellt wird.

2. Frontkraftheber nach Anspruch 1, wobei der zweite Bereich einer Bewegung des Frontkrafthebers in einer vollständig angehobenen verstauten Position der Hubwerks (12) resultiert, in der das Hubwerk im Wesentlichen vertikal verläuft, um das Hervorstehen des Hubwerks von der Stützstruktur (11) zu minimieren.

3. Frontkraftheber nach Anspruch 1 oder 2, wobei der Lenker (15) in der ersten Schwenkstellung und der zweiten Schwenkstellung mittels eines Stifts (23) gesichert werden kann, der sich durch alternative, bündig angeordnete Öffnungen (18, 29; 19, 21) in dem Lenker bzw. dem Frontkraftheber erstreckt.

4. Frontkraftheber nach Anspruch 3, wobei das Hubwerk (12) eine erste Öffnung (18) und eine zweite Öffnung (19) und der Lenker (15) eine zugehörige erste Öffnung (20) und eine zweite Öffnung (21) aufweist, wobei der Stift (23) durch die bündigen ersten Öffnungen (18, 20) in dem Lenker und dem Hubwerk geführt wird, um den Lenker in der ersten Schwenkstellung zu sichern, und der Stift (23) durch die bündigen zweiten Öffnungen (19, 21) in dem Lenker und dem Hubwerk geführt wird, um den Lenker in der zweiten Schwenkstellung zu sichern.

5. Frontkraftheber nach Anspruch 3 oder 4, wobei Stoppmittel (15a, 22H) an dem Lenker (15) und dem Hubwerk (12) bereitgestellt sind, wobei die Stoppmittel ineinander eingreifen, wenn sich der Lenker in seiner ersten Schwenkstellung befindet, und eine Bewegung des Frontkrafthebers nach unten relativ zu dem Lenker verhindern, wenn der Stift (23) aus den bündigen Öffnungen entfernt wird.

6. Frontkraftheber nach einem der Ansprüche 1 bis 5, wobei das Hubwerk (12) ein Paar Liftarme (22) aufweist, die für eine gemeinsame Drehung um die Schwenkachse (13) drehfest (22c) an der Stützstruktur (11) befestigt sind.

7. Frontkraftheber nach Anspruch 6, wobei jeder Liftarm (22) mit einem separaten Lenker (15) mit eigenen Aktuatormitteln (14) versehen und in seiner entsprechenden ersten Schwenkstellung und zweiten Schwenkstellung sicherbar ist.

8. Frontkraftheber nach einem der Ansprüche 1 bis 7, mit einem Oberlenker, der ebenfalls schwenkbar an der Stützstruktur (11) montiert ist.

9. Frontkraftheber nach Anspruch 1, wobei ein Hilfs-Hydraulikzylinder (40) vorgesehen ist, der zwischen dem Hubwerk (12) und der Stützstruktur (11) wirksam und hydraulisch parallel zu dem Hydraulikzylinder oder den Hydraulikzylindern (14) verbunden ist, welche die Aktuatormittel bilden, wobei der Hilfs-Hydraulikzylinder (40) einen längeren Hub als der Hauptzylinder oder die Hauptzylinder (14) besitzt und nutzbar ist, um das Hubwerk zu bewegen, wenn der Hauptzylinder oder die Hauptzylinder vollständig eingefahren sind und somit der Lenker oder die Lenker (15) relativ zu dem Hubwerk (12) verschwenkt werden und somit zu einem Wechsel zwischen den Arbeitsbereichen des Frontkrafthebers beitragen.

10. Frontkraftheber nach einem der Ansprüche 1 bis 9, wobei Kontrollmittel an der Stützstruktur (11) bereitgestellt sind, die es einem Bediener erlauben, die Stellung des Hubwerks (12) relativ zu der Stützstruktur (11) einzustellen.

11. Frontkraftheber nach einem der Ansprüche 1 bis 10, wobei die Stützstruktur (11) ausgebildet ist, um die Aktuatormittel teilweise zu umgeben (11a), um die Aktuatormitteln während einer Benutzung des Frontkrafthebers zu schützen.

## Revendications

1. Dispositif d'attelage frontal de tracteur (10) comprenant :
- une structure de support (11) destinée à être fixée sur un châssis du tracteur ;
- une biellette (12) fixée de manière à pouvoir pivoter sur la structure de support afin de pivoter dans un sens vertical autour d'un axe sensiblement horizontal (13) ;
- des moyens d'activation (14) montés sur la structure de support afin de faire pivoter la biellette par rapport à la structure de support, dans lequel le ou chaque moyen d'activation est un vérin hydraulique principal (14) ;
- **caractérisé en ce que** le ou chaque vérin hydraulique (14) est monté, à son extrémité supérieure, sur la structure de support (11) et, à son extrémité inférieure, autour d'un axe (16) sur une liaison (15) qui est montée de manière à pouvoir pivoter autour d'un axe (17) sur la biellette et peut être fixée (23) dans des première et seconde positions de pivotement par rapport à la biellette, la liaison (15) étant fixée dans ladite première position de pivotement (18, 20), une première plage utile de déplacement de la biellette par rapport à la structure de support est assurée par les moyens d'activation et la liaison (15) étant fixée dans ladite seconde position de pivotement (19, 21), une seconde plage utile de déplacement plus élevé de la biellette par rapport à la structure de support est assurée par les moyens d'activation.

2. Dispositif d'attelage selon la revendication 1, dans lequel la seconde plage de déplacement du dispositif d'attelage culmine dans une position stockée entièrement soulevée de la biellette (12) dans laquelle la biellette est sensiblement verticale afin de minimiser la saillie de la biellette par rapport à la structure de support (11).

3. Dispositif d'attelage selon la revendication 1 ou 2, dans lequel la liaison (15) peut être fixée dans lesdites première et seconde positions de pivotement par une broche (23) qui s'étend à travers des ouvertures alignées de manière alternée (18, 29 ; 19, 21) respectivement sur la liaison et le dispositif d'attelage.

4. Dispositif d'attelage selon la revendication 3, dans lequel la biellette (12) comporte des première et seconde ouvertures (18, 19), et la liaison (15) comporte des première et seconde ouvertures coopérantes (20, 21), la broche (23) étant insérée, à travers les premières ouvertures alignées (18, 20), sur la liaison et la biellette afin de fixer la liaison dans ladite première position de pivotement et, à travers les secondes ouvertures alignées (19, 21), sur la liaison et la biellette afin de fixer la liaison dans ladite seconde position de pivotement.

5. Dispositif d'attelage selon la revendication 3 ou 4, dans lequel des moyens d'arrêt (15a, 22H) sont agencés sur la liaison (15) et la biellette (12), les moyens d'arrêt étant couplés lorsque la liaison est dans sa première position de pivotement et en empêchant le déplacement vers le bas de la biellette par rapport à la liaison lorsque la broche (23) est retirée des ouvertures alignées.

6. Dispositif d'attelage selon l'une quelconque des revendications 1 à 5, dans lequel la biellette (12) comporte une paire de bras de levage (22) qui sont reliés de manière rigide (22c) afin de tourner simultanément autour de l'axe de pivot (13) sur la structure de support (11).

7. Dispositif d'attelage selon la revendication 6, dans lequel chaque bras de levage (22) comporte une liaison (15) distincte ayant son propre moyen d'activation (14) et pouvant être fixée de manière séparée dans ses première et seconde positions de pivotement respectives.

8. Dispositif d'attelage selon l'une quelconque des revendications 1 à 7, comportant une liaison supérieure qui est aussi montée de manière à pouvoir pivoter sur la structure de support (11).

9. Dispositif d'attelage selon la revendication 1, dans lequel un vérin hydraulique auxiliaire (40) est agencé, lequel agit entre la biellette (12) et la structure de support (11) et est raccordé hydrauliquement en parallèle avec le ou les vérins hydrauliques (14) qui forment les moyens d'activation, le vérin auxiliaire (40) présentant une course supérieure à celle du ou des vérins principaux (14) et pouvant être utilisé afin de déplacer la biellette lorsque le ou les vérins principaux sont entièrement rétractés, faisant ainsi pivoter la liaison ou les liaisons (15) par rapport à la biellette (12) et facilitant ainsi le changement entre les plages utiles du dispositif d'attelage.

10. Dispositif d'attelage selon l'une quelconque des revendications 1 à 9, dans lequel des moyens de commande sont agencés sur la structure de support (11), lesquels permettent à un opérateur de commander la position de la biellette (12) par rapport à la structure de support (11).

11. Dispositif d'attelage selon l'une quelconque des revendications 1 à 10, dans lequel la structure de support (11) est formée afin d'envelopper partiellement (11a) les moyens d'activation de manière à assurer une protection des moyens d'activation au cours de l'utilisation du dispositif d'attelage.
